# EUROPÄISCHE PATENTSCHRIFT

(11) **EP 0 860 975 B1**
(45) Veröffentlichungstag und Bekanntmachung des Hinweises auf die Patenterteilung: **08.06.2005**
(21) Anmeldenummer: 98440032.5
(22) Anmeldetag: 19.02.1998
(51) Int. Cl.: H04M 15/00, H04M 15/28

(54) **Verfahren zur Ermittlung von Entgelten für gebührenpflichtige TK-Dienstleistungen**
Method for billing of toll telecommunication services
Procédé de taxation de l'utilisation des services de télécommunication

(30) Priorität: 21.02.1997 DE 19706999
(43) Veröffentlichungstag der Anmeldung: 26.08.1998
(73) Patentinhaber: ALCATEL, 75008 Paris (FR)
(72) Erfinder: Halm, Volker, 74369 Löchgau (DE)
(74) Vertreter: Rausch, Gabriele, Dr.

(56) Entgegenhaltungen:
- EP-A- 0 809 387
- WO-A-95/24094
- DE-A- 3 305 978
- US-A- 5 488 655
- US-A- 5 570 417
- PATENT ABSTRACTS OF JAPAN vol. 097, no. 006, 30. Juni 1997 & JP 09 046453 A (CANON INC), 14. Februar 1997
- PATENT ABSTRACTS OF JAPAN vol. 097, no. 002, 28. Februar 1997 & JP 08 256229 A (TOSHIBA CORP), 1. Oktober 1996
- HIROSHI SHIMIZU ET AL: "EVOLUTION OF BILLING ARCHITECTURE" PROCEEDING OF THE INTERNATIONAL SWITCHING SYMPOSIUM, ISS 1992, Bd. 2, Nr. SYMP. 14, 25. - 30. Oktober 1992, Seiten 299-303, XP000350403 Yokohama, JP

## Beschreibung

Die Erfindung betrifft ein Verfahren zur Ermittlung von Entgelten für gebührenpflichtige Telekommunikations(TK)-Dienstleistungen, bei dem mittels einer Zählereinrichtung in einem bestimmten Abrechnungszeitraum die aktuell aufgelaufene Entgeltsumme für einen individuellen Kunden berechnet wird.

Die Nutzung von Telekommunikations (TK)-Dienstleistungen, beispielsweise Telefonieren, Telefaxen, Zugriff auf Datenbanksysteme und dergleichen, ist in der Regel für den Benutzer nicht kostenlos, sondern wird vom Diensteanbieter gegenüber dem benutzenden Kunden durch tarifliche Entgeltforderungen in Rechnung gestellt. Neben fixen Grundgebühren fließen in die Rechnungsstellung meist auch verbrauchsabhängige Entgeltbeträge für die Nutzung von gebührenpflichtigen Dienstleistungen in die Rechnung ein, wobei die letzteren häufig sogar den Löwenanteil des Rechnungsbetrages ausmachen. Die übliche Art der Tarifierung in der Fernmeldetechnik ist beispielsweise beschrieben in dem "Lehrbuch der Fernmeldetechnik", Band 1, Fachverlag Schiele & Schön GmbH, Berlin, 1986, Seiten 614 bis 620.

Wie über die Vergebührung die Auslastung eines TK-Systems geregelt werden kann, wird z.B. in der deutschen Patentanmeldung Nr. 33 05 978 A1 beschrieben.

Üblicherweise sind die Gebührenstrukturen zur Entgeltermittlung relativ starr und differenzieren sich lediglich nach Entfernungszonen und Tageszeiten. Allenfalls werden Gebührenermäßigungen für Sonn- und Feiertage gegenüber Werktagen generell gewährt. Im Prinzip ist aber jedenfalls eine für jeden Nutzer der entsprechenden TK-Dienstleistungen gleiche Gebührenstruktur vorgesehen.

Wie eine Vergebührung in einem fixen Tarifierungssystem für einen Nutzer optimiert werden kann, ist z.B. in dem U.S.-Patent Nr. 5,570,417 beschrieben.

Zur Erhöhung des Anreizes zur Nutzung eines bestimmten TK-Dienstes wurden in jüngster Zeit Konzepte für teilnehmerindividuelle Tarifierungen vorgestellt, bei denen beispielsweise im Fernsprechbereich Verbindungen eines Benutzers mit für den entsprechenden Teilnehmer individuell festlegbaren anderen TK-Endgeräten (repräsentiert durch die entsprechenden Telefonnummern) mit einem günstigeren Tarif vergebührt werden.

Aufgabe der vorliegenden Erfindung ist es demgegenüber, ein Verfahren der eingangs genannten Art vorzustellen, das zu einer weiteren Erhöhung des Nutzungsanreizes der entsprechenden TK-Dienstleistung beiträgt und eine höhere Auslastung des entsprechenden TK-Dienstleistungssystems sowie eine Umsatzsteigerung für den Diensteanbieter bewirkt.

Erfindungsgemäß wird diese Aufgabe auf überraschend einfache, aber dennoch wirkungsvolle Art und Weise dadurch gelöst, daß nach Überschreiten eines individuell für den Kunden durch den Anbieter der TK-Dienstleistungen festlegbaren Schwellwertes der aktuell aufgelaufenen Entgeltsumme eine begrenzte gebührenermäßigte, vorzugsweise gebührenfreie Nutzung der TK-Dienstleistungen dem Kunden zur Verfügung gestellt wird.

Dazu wird die tatsächliche Nutzung des TK-Dienstes durch den entsprechenden Kunden mittels einer Überwachung der aktuell aufgelaufenen Entgeltsumme innerhalb eines Abrechnungszeitraums ermittelt. Es erfolgt eine Zuordnung eines Tarifs zur Vergebührung der ermittelten Nutzung und bei Erreichen einer durch den Diensteanbieter festlegbaren Umsatzschwelle wird ein günstigerer Tarif zugeordnet. Dieser günstigere Tarif kann beispielsweise in der Gewährung von gebührenermäßigten Einheiten oder vorzugsweise von einer bestimmten Anzahl von Freieinheiten oder aber auch einer gebührenermäßigten oder gebührenfreien Zeitdauer einer weiteren Nutzung der TK-Dienstleistung bestehen.

Besonders bevorzugt ist eine Ausführungsform des erfindungsgemäßen Verfahrens, bei der ein Signal zur Anzeige des Beginns der gebührenermäßigten Nutzung der TK-Dienstleistungen an den Kunden übermittelt wird. Dadurch wird dem Kunden das Erreichen und kurz bevorstehende Überschreiten der Gebührenschwelle deutlich gemacht, so daß er sich in seinem Nutzungsverhalten unmittelbar darauf einstellen kann. Beispielsweise könnte der Kunde ein Ferngespräch, das er ansonsten in Kürze beenden würde, nun etwas länger ausdehnen, um in den Genuß der begrenzten Gebührenermäßigung zu gelangen.

Vorteilhaft ist eine Weiterbildung dieser Ausführungsform, bei der die Anzeige des Beginns der gebührenermäßigten Nutzung optisch, vorzugsweise durch Aufleuchten einer Lampe am TK-Endgerät des Kunden erfolgt. Insbesondere im Bereich von Fernmeldedienstleistungen wird die akustische Signalübertragung während der Nutzung der Dienstleistung durch eine optische Signalanzeige nicht gestört, wobei gleichzeitig der Kunde aber über die für ihn individuell vorgesehene begrenzte Gebührenermäßigung zweifelsfrei informiert werden kann.

Bei einer weiteren Variante der Ausführungsform des erfindungsgemäßen Verfahrens erfolgt die Anzeige des Beginns der gebührenermäßigten Nutzung akustisch, vorzugsweise durch eine ggf. automatisierte Ansage und/oder einen bestimmten Signalton im TK-Endgerät des Kunden. Ein Vorteil dieses Anzeigeverfahrens besteht darin, daß nicht notwendigerweise zusätzliche endgerätseitige Einrichtungen, wie beispielsweise Signallämpchen vorgesehen werden müssen. Außerdem kann durch eine Ansage auch noch zusätzliche Information über die Art der Gebührenermäßigung unkompliziert an den Kunden übermittelt werden.

Eine weitere vorteilhafte Variante sieht vor, daß dem Kunden auch der Umfang der gebührenermäßigten Nutzung der TK-Dienstleistungen, beispielsweise die Anzahl von gebührenermäßigten bzw. gebührenfreien Einheiten oder ein Entgeltfreibetrag oder die zeitliche Dauer einer gebührenermäßigten bzw. gebührenfreien Nutzung, übermittelt wird. Dadurch wird dem Kunden eine Entscheidung für eine eventuelle Nutzung der bevorstehenden begrenzten individuellen Gebührenermäßigung erleichtert und der Anreiz zu einer höheren Nutzung des TK-Dienstes durch den Kunden erhöht.

Besonders bevorzugt ist eine Variante des erfindungsgemäßen Verfahrens, bei der dem Kunden auch ein Signal zur Anzeige des Endes der gebührenermäßigten Nutzung der TK-Dienstleistungen übermittelt wird. Damit wird dem Kunden fairerweise angezeigt, daß er demnächst wieder Entgelte nach den normalen Tarifen für eine weitere Nutzung der TK-Dienstleistung entrichten muß. Auch das Ende des gebührenermäßigten Nutzungszeitraums kann wiederum akustisch und/oder optisch angezeigt werden.

Im einfachsten Falle wird der individuelle, kundenspezifische Schwellwert, nach dessen Überschreitung eine begrenzte Gebührenermäßigung erfolgen soll, vom Diensteanbieter der TK-Dienstleistungen manuell und nach geschäftspolitischen Überlegungen festgelegt. Dabei kann beispielsweise nach verschiedenen Kundengruppen differenziert werden.

Eine weitere Möglichkeit der Schwellwertbestimmung besteht darin, daß der individuelle, kundenspezifische Schwellwert aus einer Statistik früherer Entgeltrechnungen des Kunden ermittelt wird. Auf diese Weise kann das individuelle Nutzungsverhalten eines jeden einzelnen Kunden berücksichtigt werden und beispielsweise eine gesteigerte Nutzung der angebotenen TK-Dienstleistungen im letzten Abrechnungszeitraum belohnt werden.

Bei einer besonders vorteilhaften Variante dieser Ausführungsform wird der ermittelte Schwellwert automatisch in das TK-System eingegeben, so daß keine gesonderten Entscheidungen im Einzelfall erforderlich sind, sondern lediglich eine Gesamtstrategie in Form entsprechender Bedingungen in das System eingegeben werden muß.

Ein besonderer Nutzungsanreiz mit der Folge einer weiter erhöhten Auslastung und Umsatzsteigerung schließlich wird bei einer Ausführungsform des erfindungsgemäßen Verfahrens erreicht, bei der innerhalb desselben Abrechnungszeitraumes mehrere Schwellwerte in gestaffelter Höhe vorgesehen sind. Dadurch wird für den Kunden die Möglichkeit eröffnet, trotz einer erheblichen Ausweitung seiner aktuellen Nutzung gegenüber dem durch den Kunden ursprünglich geplanten Nutzungsumfang in den Genuß weiterer Preisvorteile zu gelangen.

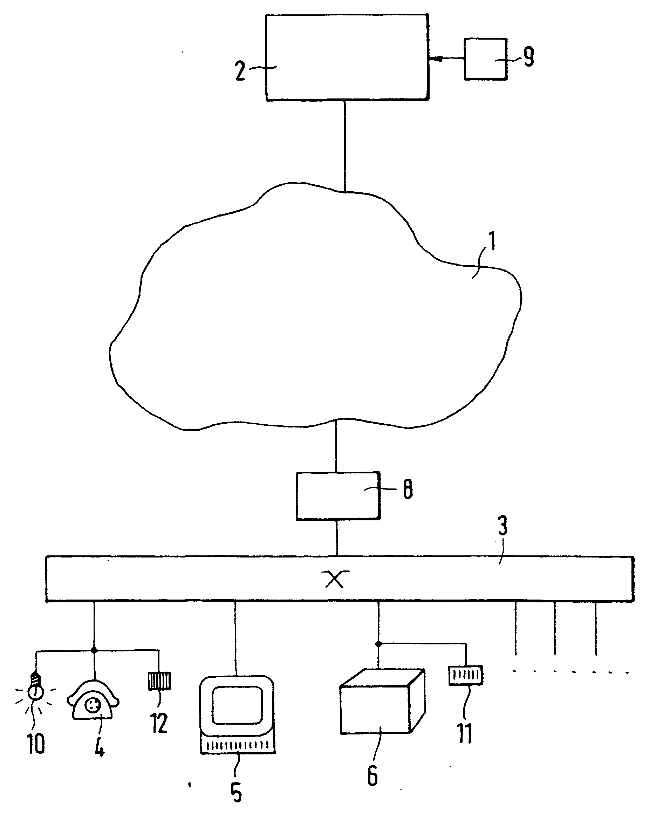

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand eines Ausführungsbeispiels näher erläutert.

In der Figur ist ein Funktionsschema für ein TK-System dargestellt, auf das das erfindungsgemäße Verfahren angewendet werden kann.

An ein Telekommunikations(TK)-Netzwerk 1, das von einem Zentralrechner 2 betrieben und gewartet wird, ist eine TK-Vermittlungseinheit 3 angeschlossen, an der eine gewisse Anzahl von TK-Endgeräten wie beispielweise ein Telefon 4, ein PC 5, ein Faxgerät 6 und so weiter hängen. Die TK-Vermittlungseinheit 3 übernimmt die Vermittlung von Verbindungen zwischen diversen TK-Endgeräten, die an derselben Vermittlungseinheit oder an anderen Vermittlungseinheiten mit Zugang zum TK-Netzwerk, die in der vorliegenden Zeichnung nicht dargestellt sind, angeschlossen sind.

Ein Gebührenrechner 8, der im dargestellten Ausführungsbeispiel zwischen den Zentralrechner 2 und die entsprechende TK-Vermittlungseinheit 3 geschaltet ist, enthält eine Zählereinrichtung, die in einem bestimmten Abrechnungszeitraum die jeweils aktuell aufgelaufene Entgeltsumme für Nutzung der TK-Dienstleistungen im TK-Netzwerk 1 durch eines der angeschlossenen TK-Endgeräte 4, 5, 6,... ermittelt. Nach Überschreiten eines individuell für den Inhaber des jeweiligen TK-Endgerätes vom Netzwerkbetreiber festgelegten Schwellwertes der aktuell aufgelaufenen Entgeltsumme wird dem Nutzer des entsprechenden TK-Endgerätes eine begrenzte gebührenermäßigte, vorzugsweise gebührenfreie Nutzung der angebotenen TK-Dienstleistung zur Verfügung gestellt. Dazu wird der entsprechende individuelle, kundenspezifische Schwellwert vom Diensteanbieter über eine Eingabeeinheit 9 dem Zentralrechner 2 mitgeteilt, der diese Information an den zuständigen Gebührenrechner 8 weiterleitet.

Anstelle einer manuellen Eingabe der kundenspezifischen Schwellwerte über die Eingabeeinheit 9 kann auch eine automatisierte, ständig angepaßte Berechnung der Schwellwerte im Zentralrechner 2, beispielsweise unter Zuhilfenahme einer Statistik früherer Entgeltrechnungen des jeweiligen Kunden erfolgen. Die ermittelten Schwellwerte können dann automatisch in das TK-System eingegeben werden.

Um dem jeweiligen Kunden einen Anreiz zu einer erhöhten Nutzung der angebotenen TK-Dienstleistungen zu bieten, wird ein Signal zur Anzeige des Beginns der gebührenermäßigten Nutzung, gegebenenfalls auch ihres Umfangs und ihres Endes übermittelt. Die Anzeige kann beispielsweise durch Aufleuchten einer Lampe 10, durch entsprechenden Hinweis auf einer Anzeigeeinrichtung 11, die beispielsweise LCD-Anzeigeelemente enthalten kann, oder durch Erscheinen eines entsprechenden optischen Hinweises auf einem Bildschirm, beispielsweise dem Bildschirm des Personal Computers 5 erfolgen. Zusätzlich oder alternativ kann die Anzeige aber auch akustisch erfolgen, beispielsweise mittels einer Ansage in einem Telefongerät 4 und/oder Erzeugen eines Signaltones im betreffenden TK-Endgerät oder einem daran angeschlossenen Lautsprecher 12.

Um den Anreiz zu einer verstärkten Nutzung der angebotenen TK-Dienstleistungen beim Endverbraucher zu erhöhen, können auch innerhalb desselben Abrechnungszeitraumes mehrere Schwellwerte in gestaffelter Höhe vorgesehen sein, so daß eine mehrfache Belohnung des verbrauchsfreudigen Kunden erfolgt.

Das erfindungsgemäße Verfahren kann für jede beliebige Art von Telekommunikations-Dienstleistungen und auch bei von dem oben beschriebenen völlig unterschiedlichen TK-Systemen angewendet werden.

## Patentansprüche

1. Verfahren zur Ermittlung von Entgelten für gebührenpflichtige Telekommunikations(TK)-Dienstleistungen, bei dem mittels einer Zählereinrichtung in einem bestimmten Abrechnungszeitraum die aktuell aufgelaufene Entgeltsumme für einen individuellen Kunden berechnet wird, und bei dem nach Überschreiten eines individuell für den Kunden durch den Anbieter der TK-Dienstleistungen festlegbaren Schwellwertes der aktuell aufgelaufenen Entgeltsumme eine begrenzte gebührenermäßigte, vorzugsweise gebührenfreie Nutzung der TK-Dienstleistungen dem Kunden zur Verfügung gestellt wird,
**dadurch gekennzeichnet,**
**dass** der individuelle, kundenspezifische Schwellwert aus einer Statistik früherer Entgeltrechnungen des Kunden ermittelt wird, und dass ein Signal zur Anzeige des Beginns der gebührenermäßigten Nutzung der TK-Dienstleistungen an den Kunden übermittelt wird.

2. Verfahren nach Anspruch 1, **dadurch gekennzeichnet, dass** die Anzeige des Beginns der gebührenermäßigten Nutzung optisch, vorzugsweise durch Aufleuchten einer Lampe (10) an einem TK-Endgerät (4) des Kunden erfolgt.

3. Verfahren nach Anspruch 1 oder 2, **dadurch gekennzeichnet, dass** die Anzeige des Beginns der gebührenermäßigten Nutzung akustisch, vorzugsweise durch eine ggf. automatisierte Ansage und/oder einen bestimmten Signalton im TK-Endgerät des Kunden, erfolgt.

4. Verfahren noch einem der Ansprüche 1 bis 3, **dadurch gekennzeichnet, dass** dem Kunden auch der Umfang der gebührenermäßigten Nutzung der TK-Dienstleistungen, beispielsweise die Anzahl von gebührenermäßigten bzw. gebührenfreien Einheiten oder ein Entgeltfreibetrag oder die zeitliche Dauer einer gebührenermäßigten bzw. gebührenfreien Nutzung, übermittelt wird.

5. Verfahren nach einem der Ansprüche 1 bis 4, **dadurch gekennzeichnet, dass** dem Kunden auch ein Signal zur Anzeige des Endes der gebührenermäßigten Nutzung der TK-Dienstleistungen übermittelt wird.

6. Verfahren nach einem der vorhergehenden Ansprüche, **dadurch gekennzeichnet, dass** der ermittelte Schwellwert automatisch in das TK-System eingegeben wird.

7. Verfahren nach einem der vorhergehenden Ansprüche, **dadurch gekennzeichnet, dass** innerhalb desselben Abrechnungszeitraumes mehrere Schwellwerte in gestaffelter Höhe vorgesehen sind.

## Claims

1. Method for determining charges for toll telecommunication services, in which the current cumulative charge total for an individual customer is calculated in a specific accounting period by means of a counter device, and in which, after a threshold value of the current cumulative charge total has been exceeded, which threshold value being individually definable for the customer by the provider of the telecommunication services, a limited reduced-charge, preferably charge-free, use of the telecommunication services is made available to the customer,
**characterized in that**
the individual, customer-specific threshold value is determined from statistics of previous bills of the customer, and a signal for indicating the start of the reduced-charge use of the telecommunication services is communicated to the customer.

2. Method according to Claim 1, **characterized in that** the start of the reduced-charge use is indicated optically, preferably by illumination of a lamp (10) on a telecommunication terminal (4) of the customer.

3. Method according to either of Claims 1 or 2, **characterized in that** the start of the reduced-charge use is indicated acoustically, preferably by a possibly automated announcement and/or a specific signal tone in the customer's telecommunication terminal.

4. Method according to any one of Claims 1 to 3, **characterized in that** the customer is also informed of the extent of the reduced-charge use of the telecommunication services, for example, the number of reduced-charge or charge-free units, or a charge-free amount or the duration of a reduced-charge or charge-free use.

5. Method according to any one of Claims 1 to 4, **characterized in that** a signal for indicating the end of the reduced-charge use of the telecommunication services is also communicated to the customer.

6. Method according to any one of the preceding Claims, **characterized in that** the determined threshold value is input automatically into the telecommunication system.

7. Method according to any one of the preceding Claims, **characterized in that** several threshold values, of graduated levels, are provided within the same accounting period.

## Revendications

1. Procédé pour déterminer la taxation de services de télécommunication, avec lequel la somme des taxes couramment consommées pour un client individuel est calculée durant une certaine période de facturation au moyen d'une installation de compteurs et avec lequel, après que la somme des taxes couramment consommées a dépassé une valeur de seuil pouvant être définie individuellement pour le client par le prestataire des service de télécommunication, il est mis à disposition du client une utilisation limitée à tarif réduit, de préférence gratuite, des services de télécommunication,
**caractérisé en ce que**
la valeur de seuil individuelle, spécifique au client, est déterminée à l'aide d'une statistique établie à partir d'anciennes factures du client,
et **en ce qu'**il est transmis au client un signal pour indiquer le début de l'utilisation à tarif réduit des services de télécommunication.

2. Procédé selon la revendication 1, **caractérisé en ce que** l'indication du début de l'utilisation à tarif réduit se fait de manière optique, de préférence par allumage d'une lampe (10) sur un terminal de télécommunication (4) du client.

3. Procédé selon la revendication 1 ou 2, **caractérisé en ce que** l'indication du début de l'utilisation à tarif réduit se fait de manière acoustique, de préférence par une annonce, le cas échéant, automatisée et/ou par un signal sonore dans le terminal de télécommunication du client.

4. Procédé selon l'une quelconque des revendications 1 à 3, **caractérisé en ce qu'**il est également communiqué au client le volume de l'utilisation à tarif réduit des services de télécommunication, par exemple le nombre d'unités à tarif réduit ou gratuites, ou un montant de taxes gratuites, ou la durée temporelle d'une utilisation à tarif réduit respectivement gratuite.

5. Procédé selon l'une quelconque des revendications 1 à 4, **caractérisé en ce qu'**il est également transmis au client un signal pour indiquer la fin de l'utilisation à tarif réduit des services de télécommunication.

6. Procédé selon l'une quelconque des revendications précédentes, **caractérisé en ce que** la valeur de seuil déterminée est introduite automatiquement dans le système de télécommunication.

7. Procédé selon l'une quelconque des revendications précédentes, **caractérisé en ce qu'**il est prévu plusieurs valeurs de seuil avec des niveaux échelonnés durant la même période de facturation.
